# EUROPÄISCHE PATENTSCHRIFT

(11) **EP 2 789 802 B1**
(45) Veröffentlichungstag und Bekanntmachung des Hinweises auf die Patenterteilung: **13.07.2022**
(21) Anmeldenummer: 13162835.6
(22) Anmeldetag: 09.04.2013
(51) Int. Cl.: F01D 9/04, F01D 5/14, F04D 29/32, F04D 29/66

(54) **Schaufelgitter für eine Turbomaschine und zugehöriges Herstellungsverfahren**
Blade cascade for a turbomachine and corresponding manufacturing method
Étage d'aubes pour une turbomachine et procédé associé de fabrication

(43) Veröffentlichungstag der Anmeldung: 15.10.2014
(73) Patentinhaber: MTU Aero Engines AG, 80995 München (DE)
(72) Erfinder: Zscherp, Carsten, 82194 Gröbenzell (DE)

(56) Entgegenhaltungen:
- EP-A1- 2 336 570
- EP-A1- 2 505 780
- WO-A1-2006/084438
- JP-A- S5 254 808
- JP-A- S54 151 707
- US-A1- 2011 110 788
- US-B2- 7 244 101

## Beschreibung

Die vorliegende Erfindung betrifft ein Schaufelgitter für eine Turbomaschine, insbesondere eine Gasturbine, eine Gasturbine, insbesondere ein Flugtriebwerk, mit einer Verdichter- und/oder Turbinenstufe mit einem solchen Leit- und/oder Laufschaufelgitter, sowie ein Verfahren zur Herstellung eines solchen Schaufelgitters.

Aus betriebsinterner Praxis ist es bekannt, in einem Schaufelgitter bzw. einer Schaufelreihe in Umfangsrichtung abwechselnd verschiedenartige Einzelschaufeln anzuordnen. Hierdurch können insbesondere Eigenfrequenzen benachbarter Einzelschaufeln variiert und so unerwünschte Schwingungsphänomene, insbesondere aeroelastische Anregungen, reduziert werden - das Schaufelgitter wird bewusst "verstimmt". Beispielsweise können statt n gleichen Einzelschaufeln m = n/2 gleiche Schaufelgruppen (Schaufelpaare) mit je zwei verschiedenartigen Einzelschaufeln A, B, oder m = n/3 gleiche Schaufelgruppen (Schaufeltriplets) mit je drei verschiedenartigen Einzelschaufeln A, B, C angeordnet werden, so dass das Schaufelgitter in Umfangsrichtung gleiche Schaufelgruppen mit verschiedenartigen Schaufeln aufweist: (A, B), (A, B), (A, B),... bzw. (A, B, C), (A, B, C), (A, B, C),....

Aus betriebsinterner Praxis ist es weiter bekannt, Seitenwände von Schaufeln zu konturieren, um insbesondere den Wirkungsgrad des Schaufelgitters zu verbessern.

Eine gleiche Konturierung der Seitenwände verschiedenartiger Einzelschaufeln eines verstimmten Schaufelgitters führt zu einer Seitenwandkonturierung, die mit der Schaufelteilung, d.h. dem Abstand zwischen benachbarten Einzelschaufeln in Umfangsrichtung, periodisch ist.

Aus der US 7 244 101 B2 ist eine Rotorschaufel eines Gasturbinentriebwerks bekannt, die ein Schaufelblatt, eine Plattform, einen Schaft und einen Schwalbenschwanz umfasst, die einstückig miteinander verbunden sind, wobei ein Staubaustrittsloch sich durch die Plattform in der Nähe eines die Plattform überbrückenden Filets und des Schafts erstreckt, um während des Betriebs Staub daraus abzuleiten.

Aufgabe der vorliegenden Erfindung ist es, eine verbesserte Turbomaschine mit Einzelschaufeln zur Verfügung zu stellen.

Diese Aufgabe wird durch ein Schaufelgitter mit den Merkmalen des Anspruchs 1 gelöst. Anspruch 9 stellt eine Gasturbine mit einem solchen Schaufelgitter unter

Schutz, Anspruch 10 ein Verfahren zur Herstellung eines solchen Schaufelgitters. Die Unteransprüche betreffen vorteilhafte Weiterbildungen.

Ein Schaufelgitter nach einem Aspekt der vorliegenden Erfindung weist mehrere gleiche Schaufelgruppen auf, die in Umfangsrichtung nebeneinander angeordnet sind. Bei den Schaufeln kann es sich insbesondere um Leit- oder Laufschaufeln handeln, in einer Weiterbildung um Leit- oder Laufschaufeln einer Gasturbine, insbesondere einer Verdichter- oder Turbinenstufe, vorzugsweise einer Niederdruckturbinenstufe.

Die Schaufelgruppen weisen jeweils eine erste Einzelschaufel mit einem Schaufelblatt mit einem Schaufelprofil und einer ersten Seitenwand und eine hiervon verschiedene zweite Einzelschaufel mit einem Schaufelblatt mit einem Schaufelprofil und einer zweiten Seitenwand auf. Hierdurch kann in einer Ausführung das Schaufelgitter gewollt "verstimmt" werden.

In einer Ausführung besteht jede Schaufelgruppe aus einer ersten Einzelschaufel A und einer hiervon verschiedenen zweiten Einzelschaufel B (A ≠ B), so dass das Schaufelgitter mit den gleichen Schaufelgruppen (A, B) die Konfiguration (A, B), (A, B), (A, B),... aufweist. In einer anderen Ausführung besteht jede Schaufelgruppe aus einer ersten Einzelschaufel A, einer hiervon verschiedenen zweiten Einzelschaufel B (A ≠ B) und einer dritten Einzelschaufel C, so dass das Schaufelgitter mit den gleichen Schaufelgruppen (A, B, C) die Konfiguration (A, B, C), (A, B, C), (A, B, C),... aufweist. Die dritte Einzelschaufel C und die erste oder zweite Einzelschaufel A bzw. B können gleich sein (A = C ≠ B bzw. A ≠ C = B). Gleichermaßen kann die dritte Einzelschaufel C von der ersten und zweiten Einzelschaufel A bzw. B verschieden sein (A ≠ C ≠ B). In einer anderen Ausführung besteht jede Schaufelgruppe aus vier oder mehr Einzelschaufeln, von denen wenigstens zwei, insbesondere alle Einzelschaufeln verschieden sind.

Voneinander verschiedene Einzelschaufeln einer Schaufelgruppe im Sinne der vorliegenden Erfindung können insbesondere unterschiedliche Schaufelprofile, Massen, Steifigkeiten, Massen- und/oder Steifigkeitsverteilungen aufweisen, insbesondere, um ihre Eigenfrequenzen und/oder aerodynamischen Anregungen zu variieren bzw. gegeneinander zu "verstimmen". Zwei Schaufelgruppen sind insbesondere gleiche Schaufelgruppen im Sinne der vorliegenden Erfindung, wenn die beiden Schaufelgruppen dieselbe Anordnung von Einzelschaufeln A, B,... aufweisen, d.h. an jeweils gleicher Stelle gleiche Einzelschaufeln aufweisen. Eine Einzelschaufel im Sinne der vorliegenden Erfindung kann insbesondere einzeln, radial innen und/oder außen, an einem Gehäuse oder Rotor und/oder auswechselbar oder dauerhaft befestigt sein, insbesondere form- und/oder reibschlüssig, vorzugsweise mittels Schwalbenschwanzverbindung oder stoffschlüssig, vorzugsweise durch Schweißen oder Kleben.

Eine Seitenwand ist eine dem Arbeitsfluidströmungskanal zugewandte innere Oberfläche einer Schaufelplattform bzw. eines Schaufelfusses oder eine dem Arbeitsfluidströmungskanal zugewandte radial äußere Oberfläche eines Schaufeldeckbandes.

Nach einem Aspekt der vorliegenden Erfindung wird vorgeschlagen, dass die erste und zweite Seitenwand verschiedene Konturierungen aufweisen. Nach diesem Aspekt wird somit eine Seitenwandkonturierung vorgeschlagen, die aperiodisch bzw. nicht (einfach) periodisch mit der Schaufelteilung und zugleich (einfach) periodisch mit den Schaufelgruppen ist, d.h. sich mit den Schaufelgruppen wiederholt.

Hierdurch kann in einer Ausführung der Wirkungsgrad des Schaufelgitters optimiert werden.

Unter einer Konturierung im Sinne der vorliegenden Erfindung wird vorliegend der Verlauf einer radialen Erstreckung r längs einer Umfangsrichtungskoordinate u an wenigstens einer Axialposition x0 und/oder längs einer Axialkoordinate x an wenigstens einer Umfangsposition u0 verstanden, d.h. r(u, x0), r(x, u0) bzw. r(u, x), wobei die Umfangsrichtungskoordinate u jeweils an einer Umfangsstirnseite einer Schaufelgruppe beginnt.

Unter verschiedenen Konturierungen im Sinne der vorliegenden Erfindung werden entsprechend unterschiedliche Verläufe der radialen Erstreckung verstanden: r_{A}(u, x0) ≠ r_{B}(u, x0), r_{A}(x, u0) ≠ r_{B}(x, u0) bzw. r_{A}(u, x) ≠ r_{B}(u, x), wobei r_{A}, r_{B} die Konturierung einer Seitenwand einer Einzelschaufel A bzw. B bezeichnet. Eine verschiedene Konturierung der Seitenwände zweier verschiedener Einzelschaufeln kann insbesondere in einem oder mehreren Querschnitten senkrecht zur Drehachse der Turbomaschine und/oder in einem oder mehreren Meridianschnitten vorliegen.

Die Kontur der zweiten Seitenwand weicht an wenigstens einer Umfangsposition in radialer Richtung um wenigstens 1%, insbesondere wenigstens 2%, vorzugsweise wenigstens 2,5% einer Schaufelhöhe des Schaufelgitters und/oder um wenigstens 0,1 mm insbesondere wenigstens 1 mm, vorzugsweise wenigstens 2 mm von der Kontur der ersten Seitenwand bei benachbarter erster und zweiter Einzelschaufel an einer in Umfangsrichtung um eine Schaufelteilung versetzten Position ab.

In einer Weiterbildung weicht die Kontur der zweiten Seitenwand zwischen einer ersten und einer zweiten Umfangsposition, die demgegenüber insbesondere um wenigstens 10%, vorzugsweise wenigstens 25% der Länge der Seitenwand in Umfangsrichtung versetzt ist, um wenigstens 1%, insbesondere wenigstens 2%, vorzugsweise wenigstens 2,5% einer Schaufelhöhe des Schaufelgitters und/oder um wenigstens 0,1 mm insbesondere wenigstens 1 mm, vorzugsweise wenigstens 2 mm von der Kontur einer ersten Seitenwand zwischen entsprechenden Umfangspositionen, insbesondere bei benachbarter erster und zweiter Einzelschaufel an in Umfangsrichtung um eine Schaufelteilung versetzten Positionen ab. Insbesondere kann also die Kontur einer Seitenwand in einem Querschnitt auf wenigstens 10%, insbesondere wenigstens 25% der Schaufelteilung von dem entsprechenden, um eine Schaufelteilung versetzten Bereich der benachbarten Seitenwand in radialer Richtung um wenigstens 1%, insbesondere wenigstens 2%, vorzugsweise wenigstens 2,5% einer Schaufelhöhe des Schaufelgitters und/oder um wenigstens 0,1 mm insbesondere wenigstens 1 mm, vorzugsweise wenigstens 2 mm abweichen.

In einer Ausführung der vorliegenden Erfindung entspricht eine Konturierung eines Außenrandes einer Seitenwand der einen der beiden gruppenäußeren Schaufeln, wenigstens im Wesentlichen, der Konturierung eines Außenrandes einer Seitenwand der anderen der beiden gruppenäußeren Schaufeln. Hierdurch können in einer Ausführung insbesondere radiale Sprünge zwischen den Seitenwänden benachbarter Schaufelgruppen reduziert, insbesondere vermieden werden.

Zusätzlich oder alternativ kann in einer Ausführung eine Konturierung eines Außenrandes einer Seitenwand einer, insbesondere ersten, Einzelschaufel jeder Schaufelgruppe, wenigstens im Wesentlichen, der Konturierung eines benachbarten Außenrandes einer Seitenwand einer benachbarten, insbesondere zweiten, Einzelschaufel jeder Schaufelgruppe entsprechen. Hierdurch können in einer Ausführung insbesondere radiale Sprünge zwischen den Seitenwänden benachbarter Einzelschaufeln einer Schaufelgruppe reduziert, insbesondere vermieden werden.

In einer Ausführung können die Seitenwände benachbarter Einzelschaufeln zwischen den Schaufelgruppen und/oder innerhalb der Schaufelgruppen, wenigstens im Wesentlichen, glatt ineinander übergehen.

In einer Ausführung können Zwischenbereiche zwischen Außenrändern der ersten und zweiten Seitenwand eine unterschiedliche Konturierung aufweisen. Beispielsweise kann einer von beiden Seitenwänden eine oder mehrere radiale Vertiefungen und/oder Aufdickungen aufweisen, wobei der andere der beiden Seitenwände an der entsprechenden Stelle keine oder eine größere oder geringere radiale Vertiefung bzw. Aufdickung aufweist.

Wie vorstehend ausgeführt, kann jede Schaufelgruppe mehr als zwei Einzelschaufeln aufweisen, d.h. außer der ersten und der hiervon verschiedenen zweiten Einzelschaufel jeweils eine oder mehrere weitere Einzelschaufeln mit einem Schaufelblatt mit einem Schaufelprofil und einer Seitenwand aufweisen, wobei eine weitere Einzelschaufel und die erste oder zweite Einzelschaufel jeweils gleich oder verschieden sein, insbesondere unterschiedliche Schaufelprofile, Massen, Steifigkeiten, Massen- und/oder Steifigkeitsverteilungen aufweisen können.

Die Seitenwand einer oder mehrerer solcher weiterer Einzelschaufeln, kann jeweils eine von der ersten und/oder zweiten Seitenwand verschiedene Konturierung aufweisen. Zusätzlich oder alternativ kann die Seitenwand einer oder mehrerer anderer solcher weiterer Einzelschaufeln die die Konturierung der ersten oder zweiten Seitenwand aufweisen.

Weitere Merkmale und Vorteile ergeben sich aus den Unteransprüchen und Ausführungsbeispielen. Hierzu zeigt, teilweise schematisiert,
- Fig. 1:: einen Teil eines Laufschaufelgitters eines Gasturbinenflugtriebwerks nach betriebsinterner Praxis in einer Draufsicht in axialer Richtung;
- Fig. 2:: einen Teil eines Laufschaufelgitters eines Gasturbinenflugtriebwerks nach einer Ausführung der vorliegenden Erfindung in Fig. 1 entsprechender Darstellung;
- Fig. 3:: einen Teil eines Laufschaufelgitters eines Gasturbinenflugtriebwerks nach einer weiteren Ausführung der vorliegenden Erfindung in Fig. 1, 2 entsprechender Darstellung; und
- Fig. 4:: eine perspektivische Ansicht eines Teils eines Laufschaufelgitters eines Gasturbinenflugtriebwerks nach einer weiteren Ausführung der vorliegenden Erfindung.

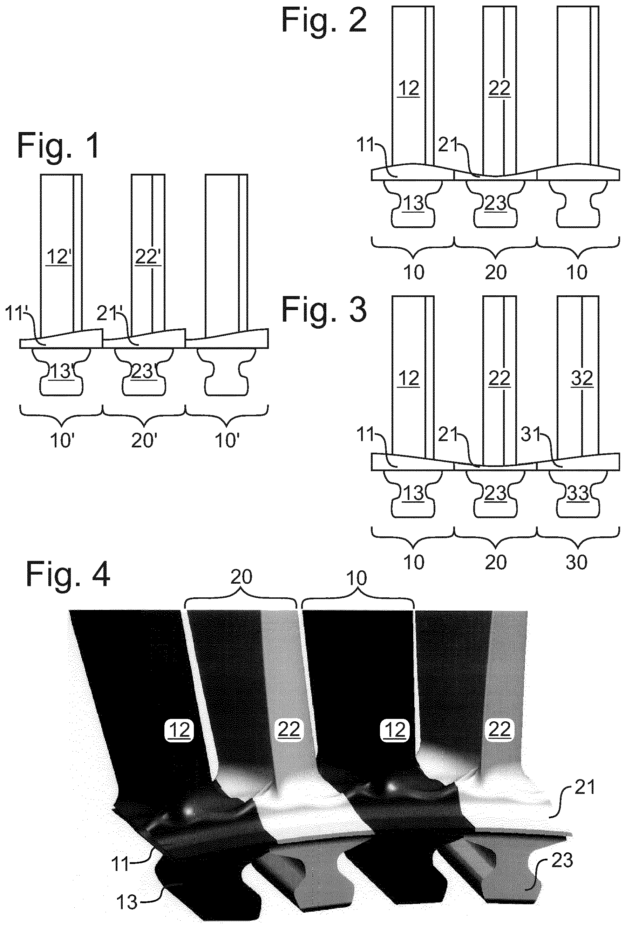

Fig. 1 zeigt einen Teil eines Laufschaufelgitters eines Gasturbinenflugtriebwerks nach betriebsinterner Praxis in einer Draufsicht in axialer Richtung. Das Laufschaufelgitter weist mehrere nebeneinander angeordnete gleiche Schaufelgruppen auf, die jeweils eine erste Einzelschaufel 10' mit einer radial inneren ersten Seitenwand zur Definition eines Arbeitsfluidströmungskanals in Form einer Schaufelplattform 11', einem Schaufelblatt 12' mit einem Schaufelprofil und einem Schwalbenschwanz-Schaufelfuß 13' sowie eine hiervon verschiedene zweite Einzelschaufel 20' mit einer zweiten Seitenwand in Form einer Schaufelplattform 21', einem Schaufelblatt 22' mit einem Schaufelprofil und einem Schwalbenschwanz-Schaufelfuß 23' aufweisen.

Die ersten und zweiten Einzelschaufeln 10', 20' unterscheiden sich insbesondere durch ihre Schaufelprofile, wie in Fig. 1 durch unterschiedliche Ein- und Austrittskanten angedeutet, um das Schaufelgitter zu "verstimmen". Mehrere gleiche Schaufelgruppen bzw. -paare (10', 20') sind in Umfangsrichtung (horizontal in Fig. 1) nebeneinander angeordnet, wobei in Fig. 1 nur eine Schaufelgruppe (10', 20') und eine Einzelschaufel 10' einer benachbarten Schaufelgruppe dargestellt ist. Diese entspricht der dargestellten Schaufelgruppe (10', 20'), so dass das Schaufelgitter die Konfiguration (10', 20'), (10', 20'), (10', 20'),... aufweist.

Die erste und zweite Seitenwand 11', 21'weisen bei dem Laufschaufelgitter der Fig. 1 nach betriebsinterner Praxis gleiche Konturierungen auf. Hierdurch ergeben sich insbesondere radiale Sprünge zwischen benachbarten Einzelschaufeln 10', 20'.

Fig. 2 zeigt einen Teil eines Laufschaufelgitters eines Gasturbinenflugtriebwerks nach einer Ausführung der vorliegenden Erfindung in Fig. 1 entsprechender Darstellung. Einander entsprechende Merkmale sind durch gleiche Bezugszeichen bezeichnet, wobei Merkmale der betriebsinternen Praxis in Fig. 1 durch einen Apostroph (') gekennzeichnet sind. Somit wird nachfolgend nur auf die Unterschiede zur Ausführung der Fig. 1 eingegangen und im Übrigen auf deren Beschreibung Bezug genommen.

Auch das Laufschaufelgitter der Fig. 2 nach einer Ausführung der vorliegenden Erfindung weist mehrere gleiche Schaufelgruppen bzw. -paare (10, 20) auf, die ihrerseits jeweils eine erste Einzelschaufel 10 und eine hiervon verschiedene zweite Einzelschaufel 20 aufweisen, wobei die ersten und zweiten Einzelschaufeln 10, 20 sich insbesondere durch ihre Schaufelprofile unterscheiden, um das Schaufelgitter zu "verstimmen". Mehrere gleiche Schaufelgruppen bzw. -paare (10, 20) sind in Umfangsrichtung nebeneinander angeordnet, wobei auch in Fig. 2 nur eine Schaufelgruppe (10, 20) und eine erste Einzelschaufel 10 einer benachbarten Schaufelgruppe dargestellt ist. Das Schaufelgitter weist somit die Konfiguration (10, 20), (10, 20), (10, 20),... mit gleichen Schaufelgruppen (10, 20) mit ersten und hiervon verschiedenen Einzelschaufeln 10, 20 auf.

Die erste und zweite Seitenwand 11, 21 weisen bei dem Laufschaufelgitter der Fig. 2 nach einer Ausführung der vorliegenden Erfindung verschiedene Konturierungen auf. Man erkennt, dass die ersten Seitenwände 11 in Umfangsrichtung eine im Wesentlichen zum Strömungskanal konvexe Konturierung aufweisen, die zweiten Seitenwände 21 hingegen eine zum Strömungskanal konkave Konturierung, so dass das Schaufelgitter der Fig. 2 im Gegensatz zu dem der Fig. 1 keine mit der Schaufelteilung periodische radial innere Seitenwand aufweist. Die radial innere Seitenwand des Schaufelgitters der Fig. 2 ist jedoch periodisch mit den Schaufelgruppen, d.h. wiederholt sich mit jeder der aufeinanderfolgenden bzw. benachbarten Schaufelgruppen (10, 20).

Die Konturierung der Seitenwand 11 der ersten Einzelschaufeln weicht bis auf die Außenränder an allen Umfangspositionen von der Konturierung der Seitenwand 21 der benachbarten zweiten Einzelschaufeln an einer entsprechenden Umfangsposition in radialer Richtung ab.

Man erkennt in der Zusammenschau der zweiten Einzelschaufel 20 und der in Fig. 2 rechten ersten Einzelschaufel 10, dass die Konturierung des in Fig. 2 rechten Außenrandes der Seitenwand 21 der gruppenäußeren Schaufel 20 der Konturierung des in Fig. 2 linken Außenrandes der Seitenwand 11 der anderen gruppenäußeren Schaufel 10 entspricht.

In der Zusammenschau der zweiten Einzelschaufel 20 und der in Fig. 2 linken ersten Einzelschaufel 10 erkennt man, dass die Konturierung des in Fig. 2 rechten Außenrandes der Seitenwand 11 der ersten Einzelschaufel 10 einer Schaufelgruppe (10, 20) der Konturierung des benachbarten, in Fig. 2 linken Außenrandes der Seitenwand 21 der benachbarten zweiten Einzelschaufel 20 dieser Schaufelgruppe (10, 20) entspricht.

Auf diese Weise werden radiale Absätze innerhalb der Schaufelgruppen (10, 20) und zwischen den Schaufelgruppen (10, 20), (10, 20) vermieden.

Fig. 3 zeigt einen Teil eines Laufschaufelgitters eines Gasturbinenflugtriebwerks nach einer weiteren Ausführung der vorliegenden Erfindung in Fig. 1, 2 entsprechender Darstellung. Einander entsprechende Merkmale sind durch gleiche Bezugszeichen bezeichnet, so dass nachfolgend nur auf die Unterschiede zur Ausführung der Fig. 1, 2 eingegangen und im Übrigen auf deren Beschreibung Bezug genommen wird.

In der Ausführung der Fig. 3 weisen die Schaufelgruppen jeweils eine weitere, dritte Einzelschaufel 30 mit einem Schaufelblatt 32 mit einem Schaufelprofil und einer Seitenwand 31 auf.

Die ersten, zweiten und dritten Einzelschaufeln 10, 20, 30 unterscheiden sich insbesondere durch ihre Schaufelprofile, um das Schaufelgitter zu "verstimmen". Mehrere gleiche Schaufelgruppen bzw. -triplets (10, 20, 30) sind in Umfangsrichtung nebeneinander angeordnet, wobei in Fig. 3 nur eine Schaufelgruppe (10, 20, 30) dargestellt ist. Das Schaufelgitter weist somit die Konfiguration (10, 20, 30), (10, 20, 30), (10, 20, 30),... mit gleichen Schaufelgruppen (10, 20, 30) mit ersten, hiervon verschiedenen zweiten und hiervon verschiedenen dritten Einzelschaufeln 10, 20 bzw. 30 auf.

Die dritten Seitenwände 31 weisen eine von der ersten Seitenwand 11 und zweiten Seitenwand 21 verschiedene Konturierung auf. Man erkennt, dass die ersten Seitenwände 11 in Umfangsrichtung eine im Wesentlichen zum Strömungskanal konvexe Konturierung aufweisen, die zweiten Seitenwände 21 eine zum Strömungskanal konkave Konturierung, und die dritten Seitenwände 31 in Umfangsrichtung eine im Wesentlichen zum Strömungskanal konvexe Konturierung, die gegensinnig bzw. spiegelsymmetrisch zu derjenigen der ersten Seitenwände 11 ist, so dass auch das Schaufelgitter der Fig. 3 keine mit der Schaufelteilung periodische radial innere Seitenwand aufweist. Die radial innere Seitenwand des Schaufelgitters der Fig. 3 ist ebenfalls periodisch mit den Schaufelgruppen, d.h. wiederholt sich mit jeder der aufeinanderfolgenden bzw. benachbarten Schaufelgruppen (10, 20, 30).

Die Konturierung der Seitenwand 11 der ersten Einzelschaufeln weicht bis auf die Außenränder an allen Umfangspositionen von der Konturierung der Seitenwand 21 der benachbarten zweiten Einzelschaufeln an einer entsprechenden Umfangsposition in radialer Richtung ab. Ebenso weicht die Konturierung der Seitenwand 31 der dritten Einzelschaufeln bis auf die Außenränder an allen Umfangspositionen von der Konturierung der Seitenwand 21 der benachbarten zweiten Einzelschaufeln an einer entsprechenden Umfangsposition in radialer Richtung ab. Zudem weicht die Konturierung der Seitenwand 31 der dritten Einzelschaufeln bis auf eine Schaufelmitte an allen Umfangspositionen von der Konturierung der Seitenwand 11 der ersten Einzelschaufeln an einer entsprechenden Umfangsposition in radialer Richtung ab.

Man erkennt in der Zusammenschau, dass die Konturierung des in Fig. 3 rechten Außenrandes der Seitenwand 31 der gruppenäußeren Schaufel 30 der Konturierung des in Fig. 3 linken Außenrandes der Seitenwand 11 der anderen gruppenäußeren Schaufel 10 entspricht.

In der Zusammenschau der zweiten Einzelschaufel 20 ersten Einzelschaufel 10 bzw. dritten Einzelschaufel 30 erkennt man zudem, dass die Konturierung des in Fig. 2 rechten Außenrandes der Seitenwand 11 der ersten Einzelschaufel 10 der Konturierung des benachbarten, in Fig. 2 linken Außenrandes der Seitenwand 21 der benachbarten zweiten Einzelschaufel 20 dieser Schaufelgruppe entspricht, und dass die Konturierung des in Fig. 2 linken Außenrandes der Seitenwand 31 der dritten Einzelschaufel 30 der Konturierung des benachbarten, in Fig. 2 rechten Außenrandes der Seitenwand 21 der benachbarten zweiten Einzelschaufel 20 dieser Schaufelgruppe entspricht.

Auf diese Weise werden wiederum radiale Absätze innerhalb der Schaufelgruppen (10, 20, 30) und zwischen den Schaufelgruppen (10, 20, 30), (10, 20, 30) vermieden.

Fig. 4 zeigt eine perspektivische Ansicht eines Teils eines Laufschaufelgitters eines Gasturbinenflugtriebwerks nach einer weiteren Ausführung der vorliegenden Erfindung. Einander entsprechende Merkmale sind durch gleiche Bezugszeichen bezeichnet, so dass nachfolgend nur auf die Unterschiede zur Ausführung der Fig. 1 bis 3 eingegangen und im Übrigen auf deren Beschreibung Bezug genommen wird.

Während in Fig. 1 bis 3 zur Verdeutlichung die Konturierung nur in Umfangsrichtung und auf einfache Weise variiert, weist die Ausführung der Fig. 4 auch in axialer Richtung unterschiedliche Konturierungen der Seitenwände 11, 21 der ersten und hiervon verschiedenen zweiten Einzelschaufeln 10, 20 auf. Auch hier werden radiale Absätze innerhalb der Schaufelgruppen (10, 20) und zwischen den Schaufelgruppen (10, 20), (10, 20) vermieden.

### Bezugszeichenliste

- 10('): erste Einzelschaufel
- 11('), 21('), 31: Schaufelplattform (Seitenwand)
- 12('), 22('), 32: Schaufelblatt
- 13('), 23('), 33: Schaufelfuß
- 20('): zweite Einzelschaufel
- 30: dritte Einzelschaufel

## Patentansprüche

1. Schaufelgitter für eine Turbomaschine, insbesondere eine Gasturbine, wobei das Schaufelgitter mehrere in Umfangsrichtung nebeneinander angeordnete, gleiche Schaufelgruppen aufweist, die jeweils
eine erste Einzelschaufel (10) mit
einem Schaufelblatt (12) mit einem Schaufelprofil und
einer ersten Seitenwand (11), und
eine hiervon verschiedene benachbarte zweite Einzelschaufel (20) mit
einem Schaufelblatt (22) mit einem Schaufelprofil und
einer zweiten Seitenwand (21)
aufweisen, wobei eine Seitenwand eine dem Arbeitsfluidströmungskanal zugewandte innere Oberfläche einer Schaufelplattform oder eine dem Arbeitsfluidströmungskanal zugewandte radial äußere Oberfläche eines Schaufeldeckbandes ist, **dadurch gekennzeichnet, dass**
die erste und zweite Seitenwand (11, 21) verschiedene Konturierungen aufweisen, wobei unter einer Konturierung der Verlauf einer radialen Erstreckung längs einer Umfangsrichtungskoordinate an wenigstens einer Axialposition und/oder längs einer Axialkoordinate an wenigstens einer Umfangsposition verstanden wird, wobei die Umfangsrichtungskoordinate jeweils an einer Umfangsstirnseite einer Schaufelgruppe beginnt, und wobei unter verschiedenen Konturierungen unterschiedliche Verläufe der radialen Erstreckung verstanden werden, wobei die Kontur der zweiten Seitenwand an wenigstens einer Umfangsposition in radialer Richtung um wenigstens 1% einer Schaufelhöhe des Schaufelgitters und/oder um wenigstens 0,1 mm von der Kontur der ersten Seitenwand an einer in Umfangsrichtung um eine Schaufelteilung versetzten Position abweicht.

2. Schaufelgitter nach Anspruch 1, **dadurch gekennzeichnet, dass** die Schaufelgruppen jeweils wenigstens eine weitere Einzelschaufel (30) mit einem Schaufelblatt (32) mit einem Schaufelprofil und einer Seitenwand (31) aufweisen, die eine von der ersten und/oder zweiten Seitenwand (11, 21) verschiedene Konturierung aufweist.

3. Schaufelgitter nach einem der vorhergehenden Ansprüche, **dadurch gekennzeichnet, dass** die Schaufelgruppen jeweils wenigstens eine weitere Einzelschaufel mit einem Schaufelblatt mit einem Schaufelprofil und einer Seitenwand aufweisen, die die Konturierung der ersten oder zweiten Seitenwand aufweist.

4. Schaufelgitter nach einem der vorhergehenden Ansprüche, **dadurch gekennzeichnet, dass** eine Konturierung eines Außenrandes einer Seitenwand (11, 21; 11, 31) der einen der beiden gruppenäußeren Schaufeln (10, 20; 10, 30), wenigstens im Wesentlichen, der Konturierung eines Außenrandes einer Seitenwand (21, 11; 31, 11) der anderen der beiden gruppenäußeren Schaufeln, wenigstens im Wesentlichen, entspricht.

5. Schaufelgitter nach einem der vorhergehenden Ansprüche, **dadurch gekennzeichnet, dass** eine Konturierung eines Außenrandes einer Seitenwand (11; 31) einer, insbesondere ersten, Einzelschaufel (10; 31) einer Schaufelgruppe, wenigstens im Wesentlichen, der Konturierung eines benachbarten Außenrandes einer Seitenwand (21) einer benachbarten, insbesondere zweiten, Einzelschaufel (20) dieser Schaufelgruppe entspricht.

6. Schaufelgitter nach einem der vorhergehenden Ansprüche, **dadurch gekennzeichnet, dass** zwei voneinander verschiedene Einzelschaufeln (10, 20; 10, 20, 30) einer Schaufelgruppe unterschiedliche Schaufelprofile, Massen, Steifigkeiten, Massen- und/oder Steifigkeitsverteilungen aufweisen.

7. Schaufelgitter nach einem der vorhergehenden Ansprüche, **dadurch gekennzeichnet, dass** die Seitenwände (11, 21; 11, 21, 31) radial innere und/oder äußere Seitenwände zur Definition eines Arbeitsfluidströmungskanals aufweisen.

8. Schaufelgitter nach einem der vorhergehenden Ansprüche, **dadurch gekennzeichnet, dass** eine Konturierung einer Seitenwand (21) einer Einzelschaufel (20) einer Schaufelgruppe an wenigstens einer Umfangsposition von einer Konturierung einer Seitenwand (11, 31) einer weiteren, insbesondere benachbarten, Einzelschaufel (10, 30) dieser Schaufelgruppe an einer entsprechenden Umfangsposition in radialer Richtung um wenigstens 1%, insbesondere wenigstens 2%, vorzugsweise wenigstens 2,5% einer Schaufelhöhe des Schaufelgitters und/oder um wenigstens 0,1 mm insbesondere wenigstens 1 mm, vorzugsweise wenigstens 2 mm abweicht.

9. Gasturbine, insbesondere Flugtriebwerk, mit wenigstens einer Verdichter- und/oder Turbinenstufe mit einem Leit- und/oder Laufschaufelgitter nach einem der vorhergehenden Ansprüche.

10. Verfahren zum Herstellen eines Schaufelgitters nach Anspruch 1 oder einem der darauf rückbezogenen Ansprüche.

## Claims

1. Blade cascade for a turbomachine, in particular a gas turbine, the blade cascade comprising a plurality of identical blade groups which are arranged next to one another in the circumferential direction and each comprise
a first individual blade (10) having
an airfoil (12) with a blade profile and
a first lateral wall (11), and
an adjacent second individual blade (20) which is different from the first individual blade, having
an airfoil (22) with a blade profile and
a second lateral wall (21),
a lateral wall being an inner surface of a blade platform that faces the working fluid flow channel or a radially outer surface of a blade shroud that faces the working fluid flow channel, **characterized in that**
the first and the second lateral wall (11, 21) have different contourings, contouring being understood to mean the course of a radial extension along a circumferential direction coordinate at at least one axial position and/or along an axial coordinate at at least one circumferential position, the circumferential direction coordinate in each case starting at a circumferential end face of a blade group, and different contourings being understood to mean different courses of the radial extension, the contour of the second lateral wall at at least one circumferential position in the radial direction deviating by at least 1% of a blade height of the blade cascade and/or by at least 0.1 mm from the contour of the first lateral wall at a position which is offset in the circumferential direction by one blade pitch.

2. Blade cascade according to claim 1, **characterized in that** the blade groups each have at least one further individual blade (30) having an airfoil (32) with a blade profile and a lateral wall (31) which has a different contouring to the first and/or second lateral wall (11, 21).

3. Blade cascade according to any of the preceding claims, **characterized in that** the blade groups each have at least one further individual blade having an airfoil with a blade profile and a lateral wall which has the contouring of the first or second lateral wall.

4. Blade cascade according to any of the preceding claims, **characterized in that** a contouring of an outer edge of a lateral wall (11, 21; 11, 31) of one of the two outer blades (10, 20; 10, 30) of the group at least substantially corresponds to the contouring of an outer edge of a lateral wall (21, 11; 31, 11) of the other of the two outer blades of the group.

5. Blade cascade according to any of the preceding claims, **characterized in that** a contouring of an outer edge of a lateral wall (11; 31) of an, in particular first, individual blade (10; 31) of a blade group at least substantially corresponds to the contouring of an adjacent outer edge of a lateral wall (21) of an adjacent, in particular second, individual blade (20) of this blade group.

6. Blade cascade according to any of the preceding claims, **characterized in that** two different individual blades (10, 20; 10, 20, 30) of a blade group have different blade profiles, masses, rigidities, mass distributions and/or rigidity distributions.

7. Blade cascade according to any of the preceding claims, **characterized in that** the lateral walls (11, 21; 11, 21, 31) have radially inner and/or radially outer lateral walls for defining a working fluid flow channel.

8. Blade cascade according to any of the preceding claims, **characterized in that** a contouring of a lateral wall (21) of an individual blade (20) of a blade group at at least one circumferential position deviates from a contouring of a lateral wall (11, 31) of a further, in particular adjacent, individual blade (10, 30) of this blade group at a corresponding circumferential position in the radial direction by at least 1%, in particular at least 2%, preferably at least 2.5% of a blade height of the blade cascade and/or by at least 0.1 mm, in particular at least 1 mm, preferably at least 2 mm.

9. Gas turbine, in particular an aircraft engine, having at least one compressor and/or turbine stage with a guide vane and/or rotor blade cascade according to any of the preceding claims.

10. Method for producing a blade cascade according to claim 1 or any of the claims dependent thereon.

## Revendications

1. Grille d'aubes pour une turbomachine, en particulier une turbine à gaz, dans laquelle la grille d'aubes comporte plusieurs groupes d'aubes identiques disposés les uns à côté des autres dans la direction circonférentielle, lesquels comportent respectivement
une première aube individuelle (10) comportant
une pale d'aube (12) comportant un profil d'aube et
une première paroi latérale (11), et
une seconde aube individuelle (20), adjacente et différente de la première aube individuelle, comportant
une pale d'aube (22) comportant un profil d'aube et
une seconde paroi latérale (21),
dans laquelle une paroi latérale est une surface intérieure d'une plate-forme d'aube faisant face au canal d'écoulement de fluide de travail ou une surface radialement extérieure d'une bande de recouvrement d'aube faisant face au canal d'écoulement de fluide de travail, **caractérisée en ce que**
les première et seconde parois latérales (11, 21) présentent des contours différents, dans laquelle le contour est compris comme le tracé d'une extension radiale le long d'une coordonnée de direction circonférentielle à au moins une position axiale et/ou le long d'une coordonnée axiale à au moins une position circonférentielle, dans laquelle la coordonnée de direction circonférentielle commence respectivement sur une face frontale circonférentielle d'un groupe d'aubes, et dans laquelle différents contours sont compris comme différents tracés de l'extension radiale, dans laquelle le contour de la seconde paroi latérale diffère d'au moins 1 % d'une hauteur d'aube de la grille d'aubes à au moins une position circonférentielle dans la direction radiale et/ou d'au moins 0,1 mm du contour de la première paroi latérale à une position décalée d'un pas d'aube dans la direction circonférentielle.

2. Grille d'aubes selon la revendication 1, **caractérisée en ce que** les groupes d'aubes comportent respectivement au moins une autre aube individuelle (30) comportant une pale d'aube (32) comportant un profil d'aube et une paroi latérale (31), laquelle présente un contour différent de celui de la première et/ou de la seconde paroi latérale (11, 21).

3. Grille d'aubes selon l'une quelconque des revendications précédentes, **caractérisée en ce que** les groupes d'aubes comportent respectivement au moins une autre aube individuelle comportant une pale d'aube comportant un profil d'aube et une paroi latérale, laquelle comporte le contour de la première ou de la seconde paroi latérale.

4. Grille d'aubes selon l'une quelconque des revendications précédentes, **caractérisée en ce qu'**un contour d'un bord extérieur d'une paroi latérale (11, 21 ; 11, 31) de l'une des deux aubes (10, 20 ; 10, 30) extérieures au groupe correspond au moins sensiblement au contour d'un bord extérieur d'une paroi latérale (21, 11 ; 31, 11) de l'autre des deux aubes extérieures au groupe.

5. Grille d'aubes selon l'une quelconque des revendications précédentes, **caractérisée en ce qu'**un contour d'un bord extérieur d'une paroi latérale (11 ; 31) d'une aube individuelle (10 ; 31), en particulier de la première, d'un groupe d'aubes, correspond au moins sensiblement au contour d'un bord extérieur adjacent d'une paroi latérale (21) d'une aube individuelle (20) adjacente, en particulier de la deuxième, dudit groupe d'aubes.

6. Grille d'aubes selon l'une quelconque des revendications précédentes, **caractérisée en ce que** deux aubes individuelles (10, 20 ; 10, 20, 30) différentes l'une de l'autre d'un groupe d'aubes présentent des profils d'aube, des masses, des rigidités, des répartitions de masse et/ou de rigidité différents.

7. Grille d'aubes selon l'une quelconque des revendications précédentes, **caractérisée en ce que** les parois latérales (11, 21 ; 11, 21, 31) comportent des parois latérales radialement intérieures et/ou extérieures permettant de définir un canal d'écoulement de fluide de travail.

8. Grille d'aubes selon l'une quelconque des revendications précédentes, **caractérisée en ce qu'**un contour d'une paroi latérale (21) d'une aube individuelle (20) d'un groupe d'aubes, à au moins une position circonférentielle, diffère d'un contour d'une paroi latérale (11, 31) d'une autre aube individuelle (10, 30), en particulier adjacente, dudit groupe d'aubes, à une position circonférentielle correspondante dans la direction radiale, d'au moins 1 %, en particulier d'au moins 2 %, de préférence d'au moins 2,5 %, d'une hauteur d'aube de la grille d'aubes et/ou d'au moins 0,1 mm, en particulier d'au moins 1 mm, de préférence d'au moins 2 mm.

9. Turbine à gaz, en particulier moteur d'aéronef, comportant au moins un étage de compresseur et/ou de turbine comportant une grille d'aubes directrices et/ou mobiles selon l'une quelconque des revendications précédentes.

10. Procédé de fabrication d'une grille d'aubes selon la revendication 1 ou selon l'une quelconque des revendications dépendant de celle-ci.
